# EUROPÄISCHE PATENTANMELDUNG

(11) **EP 2 058 172 A1**
(43) Veröffentlichungstag der Anmeldung: **13.05.2009**
(21) Anmeldenummer: 08018663.8
(22) Anmeldetag: 24.10.2008
(51) Int. Cl.: B60P 1/36

(54) **Laderaumaufbau mit bewegbarer Stirnwand und Transportwagen mit einem solchen Aufbau**

(30) Priorität: 09.11.2007 DE 202007015652 U
(71) Anmelder: KOMPTECH GmbH, 8130 Frohnleiten (AT)
(72) Erfinder: Pretzler, Rudolf, Dipl.-Ing., 8600 Bruck/Mur (AT)
(74) Vertreter: Laufhütte, Dieter

(57) **Zusammenfassung**

Die Erfindung betrifft einen Laderaumaufbau mit einem Laderaum zur Aufnahme von Ladegut, mit einer Entladeseite (1), wobei der Laderaum eine der Entladeseite gegenüberliegende Stirnwand (2) aufweist, welche zur Vorverdichtung oder Entladung des Ladeguts entlang der Längsachse des Laderaums auf die Entladeseite hin bewegbar ist. Erfindungsgemäß erfolgt der Antrieb der Stirnwand über ein umlaufendes Zugmittel (3), insbesondere eine Kette.

## Beschreibung

Die vorliegende Erfindung betrifft einen Laderaumaufbau mit einem Laderaum zur Aufnahme von Ladegut, insbesondere von Schüttgut, mit einer Entladeseite, wobei der Entladeraum eine der Entladeseite gegenüberliegende Stirnwand aufweist, welche zur Vorverdichtung oder Entladung des Ladeguts entlang der Längsachse des Laderaums auf die Entladeseite hin bewegbar ist. Weiterhin betrifft die vorliegende Erfindung einen Transportwagen mit einem entsprechenden Laderaumaufbau.

Solche Laderaumaufbauten bzw. Abschiebewagen sind dabei z. B. aus DE 202 07 883 U1 bekannt. Bei solchen bekannten Systemen wird die Stirnwand mittels eines Hydraulikzylinders bzw. einer Hydraulikzylinderanordnung bewegt. Solche Systeme haben jedoch den Nachteil, dass sie erstens ein sehr hohes Ölvolumen vom Schlepper, mit welchem der Abschiebewagen üblicherweise gezogen wird, aufnehmen, welches von den meisten Schlepperhydrauliksystemen jedoch nicht zur Verfügung gestellt werden kann, und zweitens eine gleichmäßige Abschiebegeschwindigkeit schwer realisierbar machen. Zudem sind die entsprechenden Zylinderanordnungen konstruktiv aufwendig und entsprechend teuer.

Weiterhin sind für Dungstreuer Kratzbodensysteme bekannt, bei welchen Kratzleisten umlaufend über Ketten entlang des Bodens bewegt werden. Ein solches Kratzbodensystem ist jedoch für eine zügige Entladung des Laderaums nicht geeignet, und erfordert zudem eine große Höhe des Unterbaus, da die umlaufenden Kratzleisten im Unterboden Brückenkonstruktionen erforderlich machen.

Aufgabe der vorliegenden Erfindung ist es, einen Laderaumaufbau mit beweglicher Stirnwand zur Verfügung zu stellen, welcher die Nachteile des Standes der Technik vermeidet.

Erfindungsgemäß wird diese Aufgabe von einem Laderaumaufbau gemäß Anspruch 1 gelöst. Bei dem erfindungsgemäßen Laderaumaufbau handelt es sich dabei um einen Laderaumaufbau mit einem Laderaum zur Aufnahme von Ladegut, insbesondere von Schüttgut, mit einer Entladeseite, wobei der Laderaum eine der Entladeseite gegenüberliegende Stirnwand aufweist, welche zur Vorverdichtung oder Entladung des Ladeguts entlang der Längsachse des Laderaums auf die Entladeseite hin bewegbar ist. Erfindungsgemäß erfolgt dabei der Antrieb der Stirnwand über ein umlaufendes Zugmittel, insbesondere über eine Kette.

Die Stirnwand wird damit entlang des Laderaums bewegt und wirkt so wie ein Kolben, welcher das im Laderaum befindliche Ladegut vorverdichtet bzw. entlädt. Der Antrieb erfolgt jedoch nicht mehr wie im Stand der Technik über Hydraulikzylinder, sondern über ein umlaufendes Zugmittel, insbesondere eine Kette. Hierdurch kann der erfindungsgemäße Laderaumaufbau problemlos mit jedem Schlepper, auch Schleppern mit nur geringem Hydraulikölvolumen, eingesetzt werden, da das Zugmittel problemlos über einen Motor bewegt werden kann. Zudem ergibt sich eine sehr gleichmäßige Abschiebegeschwindigkeit, da das umlaufende Zugmittel problemlos mit gleichmäßiger Geschwindigkeit bewegt werden kann und die Stirnwand mit gleichmäßiger Geschwindigkeit weiter zieht. Zudem kann der Antrieb des Zugmittels mechanisch äußerst einfach über ein Antriebsrad erfolgen, über welches das Zugmittel läuft.

Weiterhin wird so auch der hohe konstruktive Aufwand vermieden, welcher zur Stabilisierung von Schubsystemen zum Bewegen der Stirnwand nötig ist, da der erfindungsgemäße, über Zugkraft arbeitende Antrieb für Querkräfte erheblich unempfindlicher ist als Schubsysteme mit Hydraulikkolben.

Vorteilhafterweise ist das Zugmittel dabei über Umlenkrollen im Bereich der Entladeseite und der dieser gegenüberliegenden Seite des Laderaumaufbaus geführt. Hierdurch ergibt sich ein umlaufender Antriebsstrang, mit welchem die Stirnwand problemlos entlang der Achse des Laderaums bewegt werden kann. Durch eine Änderung der Umlaufrichtung des Zugmittels kann nach erfolgter Vorverdichtung oder Entladung des Ladeguts die Stirnwand entsprechend wieder zurück in die Ausgangsposition auf der der Entladeseite gegenüberliegenden Seite des Laderaumaufbaus bewegt werden. Die Umlenkrollen sind dabei vorteilhafterweise auf der Entladeseite auf einer im Bereich der Entladekante angeordneten Achse angeordnet.

Vorteilhafterweise wird dabei das Zugmittel über mindestens eine der Umlenkrollen angetrieben. So ergibt sich ein besonders einfacher Antrieb des Zugmittels. Vorteilhafterweise erfolgt der Antrieb dabei auf der Entladeseite, da bei der Bewegung der Stirnseite auf die Entladeseite hin erheblich höhere Kräfte notwendig werden als bei dem Zurückstellen der Stirnwand, welches im wesentlichen ohne Gegenkräfte erfolgt.

Weiterhin vorteilhafterweise ist dabei ein Antriebsgetriebe für mindestens eine der Umlenkrollen außerhalb, insbesondere seitlich, des Laderaums angeordnet. Vorteilhafterweise ist dabei die drehbare Achse, auf welcher die Umlenkrollen angeordnet sind, seitlich aus dem Bereich des Laderaums herausgeführt, so dass dort das Antriebsgetriebe angeordnet werden kann. Hierdurch kann das Antriebsgetriebe in einem geschützten Bereich und ohne den Laderaum zu beschränken angeordnet werden.

Weiterhin vorteilhafterweise weist das umlaufende Zugmittel, insbesondere die Kette, zwei Enden auf, mit welchen es an zwei Befestigungspunkten der Stirnwand befestigt ist, so dass die Stirnwand einen Teil eines umlaufenden und geschlossenen Antriebsstranges bildet. Dadurch, dass das umlaufende Zugmittel mit seinen beiden Enden an unterschiedlichen Befestigungspunkten der Stirnwand angreift, ergibt sich eine verbesserte Kinematik bei der Bewegung der Stirnwand.

Vorteilhafterweise weist dabei mindestens einer der Befestigungspunkte ein Spannelement zum Spannen des Zugmittel sauf. Hierdurch kann das umlaufende Zugmittel, insbesondere die Kette, auf einfache Art und Weise gespannt, insbesondere vorgespannt, werden. Vorteilhafterweise handelt es sich dabei um den dem Laderaum abgewandten Befestigungspunkt.

Weiterhin vorteilhafterweise wird die Stirnwand bei der Bewegung entlang der Längsachse des Laderaums über Führungen geführt. Diese Führungen nehmen die Kräfte auf, welche von dem Ladegut auf die Stirnwand ausgeübt werden, wenn sich die Stirnwand wie ein Kolben entlang des Laderaums bewegt, und sorgen so für eine stabile Bewegung der Stirnwand. Vorteilhafterweise sind die Führungen dabei im Bodenbereich und/oder im unteren Bereich der Seitenwände angeordnet.

Weiterhin vorteilhafterweise verläuft das umlaufende Zugmittel erfindungsgemäß im Bodenbereich des Laderaums. Hier ist ausreichend Bauraum für das umlaufende Zugmittel zur Verfügung. Zudem ist der Bodenbereich des Laderaums üblicherweise ohnehin verstärkt, so dass er die zusätzlichen Kräfte, welche das umlaufende Zugmittel auf den Laderaumaufbau ausübt, problemlos und ohne weitere Verstärkungen aufnehmen kann. Insbesondere ist der Laderaumaufbau dabei üblicherweise in diesen Bereichen mit dem Fahrgestell des Transportwagens verbunden, so dass dieser Bereich besonders stabil ist.

Vorteilhafterweise verläuft dabei der oben laufende Strang des umlaufenden Zugmittels oberhalb des Bodens des Laderaums. Dieser Teil des Zugmittels verläuft damit im Laderaum selbst, so dass hier ein durchgehender Bodenbereich des Laderaums verwirklicht werden kann.

Weiterhin vorteilhafterweise verläuft der unten laufende Strang des umlaufenden Zugmittels im Aufbaurahmen des Laderaumaufbaus, welcher auch vom Fahrgestellrahmen des Transportwagens gebildet seien kann. Da das erfindungsgemäße Zugmittel lediglich einen schmalen, umlaufenden Strang, wie z. B. eine Kette darstellt, welcher im unten laufenden Strang keine weiteren Elemente trägt, benötigt es nur einen geringen Bauraum und kann so problemlos im Aufbaurahmen bzw. im Fahrgestellrahmen des Transportfahrzeugs verlaufen. Diese Bauart erlaubt eine sehr niedrige Plateauhöhe, weil im Gegensatz zu konventionellen Kratzbodenantriebssystemen, welche ebenfalls umlaufende Zugmittel verwenden, keine umlaufenden Kratzleisten vorhanden sind, welche eine Brückenkonstruktion erfordern würden. Hierdurch können die unten laufenden Zugmittel in den Fahrzeugrahmen zwischen die Räder versenkt und im Fahrzeugrahmen geführt werden.

Weiterhin vorteilhafterweise ist der entladeseitige Laderaumabschluß des erfindungsgemäßen Laderaumaufbaus als klappbarer Deckel oder als Dungstreuwerk ausgeführt. Weiterhin vorteilhafterweise weist das Dungstreuwerk dabei einen Abschlußschieber auf. Der Deckel ist vorteilhafterweise an der Oberkante des Laderaumaufbaus angelenkt und nach oben hin aufklappbar. Weiterhin vorteilhafterweise kann das Dungstreuwerk in einem klappbaren Deckel integriert ausgeführt werden.

Weiterhin vorteilhafterweise füllt die Stirnwand die gesamte Breite- und/oder Höhe des Laderaumquerschnitts aus. Hierdurch kann durch die Stirnwand, welche wie ein Kolben entlang des Laderaums bewegt wird, der gesamte Inhalt des Laderaums zur Entladeseite hin bewegt werden. Weiterhin vorteilhafterweise weist die Stirnwand weiterhin Dichtungselemente zum Boden und/oder den Seitenwänden hin auf. Die verhindern, dass Schüttgut aus dem Laderaum hinter die Stirnwand dringt, wenn die Stirnwand auf die Entladeseite hin bewegt wird und sich der Laderaum entsprechend verkleinert.

Weiterhin vorteilhafterweise weist die Stirnwand des erfindungsgemäßen Laderaumaufbaus in einem Schnitt entlang der Längsrichtung des Laderaums ein Profil mit einer entlang des Bodens des Laderaums verlaufenden Grundfläche auf, an welcher die dem Laderaum zugewandte Seite der Stirnseite nach hinten durch eine Stützstruktur abgestützt ist. Hierdurch können die Kräfte, welche beim Verschieben des Ladeguts auf die dem Laderaum zugewandte Seite der Stirnseite einwirken, über die Stützstruktur auf die Grundfläche und damit auf den Boden des Laderaums bzw. auf die Bodenkonstruktion des Laderaumaufbaus abgeleitet werden. Vorteilhafterweise ist dabei die dem Laderaum zugewandte Seite geneigt, um die Kräfte besser aufzunehmen. Weiterhin vorteilhafterweise weist das Profil dabei im wesentlichen die Form eines Dreiecks auf, mit einer schmalen Grundfläche, welche entlang des Bodens des Laderaums verläuft, sowie zwei längeren Seitenflächen, welche von der dem Laderaum zugewandten Seite der Stirnseite sowie der Stützstruktur gebildet werden.

Weiterhin vorteilhafterweise verläuft die Stirnwand dabei auf der dem Laderaum zugewandten Seite in Führungen, welche die Bewegungen der Stirnwand nach oben begrenzen, und stützt sich mit der gegenüberliegenden Seite der Grundfläche, vorteilhafterweise über Führungen, nach unten ab. Hierdurch können die entstehenden Kräfte gut bewältigt werden. Vorteilhafterweise sind dabei die auf der dem Laderaum zugewandten Seite angeordneten Führungen im Bodenbereich oder im unteren Bereich der Seitenwände angeordnet, was eine besonders stabile Struktur ergibt.

Die vorliegende Erfindung umfasst weiterhin einen Transportwagen mit einem Laderaumaufbau, wie er oben beschrieben wurde. Offensichtlich ergeben sich hierdurch die gleichen Vorteile, welche bereits oben beschrieben wurden. Ein solcher Transportwagen weist dabei insbesondere einen Fahrzeugrahmen auf, auf welchem der Laderaumaufbau montiert ist. Insbesondere handelt es sich bei einem solchen Transportwagen vorteilhafterweise um einen Anhänger, wie er z. B. von einem Schlepper gezogen werden kann.

Weiterhin vorteilhafterweise verläuft der unten laufende Strang des umlaufenden Zugmittels dabei im Fahrzeugrahmen des Transportwagens. Dadurch, dass durch das Zugmittel lediglich die Stirnwand nach vorne und nach hinten bewegt wird, ohne dass in Querrichtung verlaufende Elemente auf der Unterseite zurückbewegt werden müßten, ist ein solcher platzsparender Aufbau möglich, bei welchem die Zugmittel, insbesondere die Ketten, durch Aussparungen im Fahrzeugrahmen des Transportwagens verlaufen.

Die vorliegende Erfindung wird nun anhand eines Ausführungsbeispiels sowie Zeichnungen näher dargestellt. Dabei zeigen:
- Figur 1:: das Ausführungsbeispiel des erfindungsgemäßen Laderaumaufbaus in einer Schnittansicht entlang der Längsachse des Laderaums,
- Figur 2:: die erfindungsgemäße Stirnwand in einer Schnittansicht entlang der Längsachse des Laderaums,
- Figur 3:: das erfindungsgemäße Ausführungsbeispiel eines Transportwagens mit dem Ausführungsbeispiel des erfindungsgemäßen Laderaumaufbaus in einer perspektivischen Ansicht von schräg hinten,
- Figur 4:: ein Detail der in Figur 3 gezeigten Ansicht,
- Figur 5:: eine weitere perspektivische Ansicht des erfindungsgemäßen Transportwagens,
- Figur 6:: ein erstes Detail aus Figur 5 und
- Figur 7:: ein zweites Detail aus Figur 5.

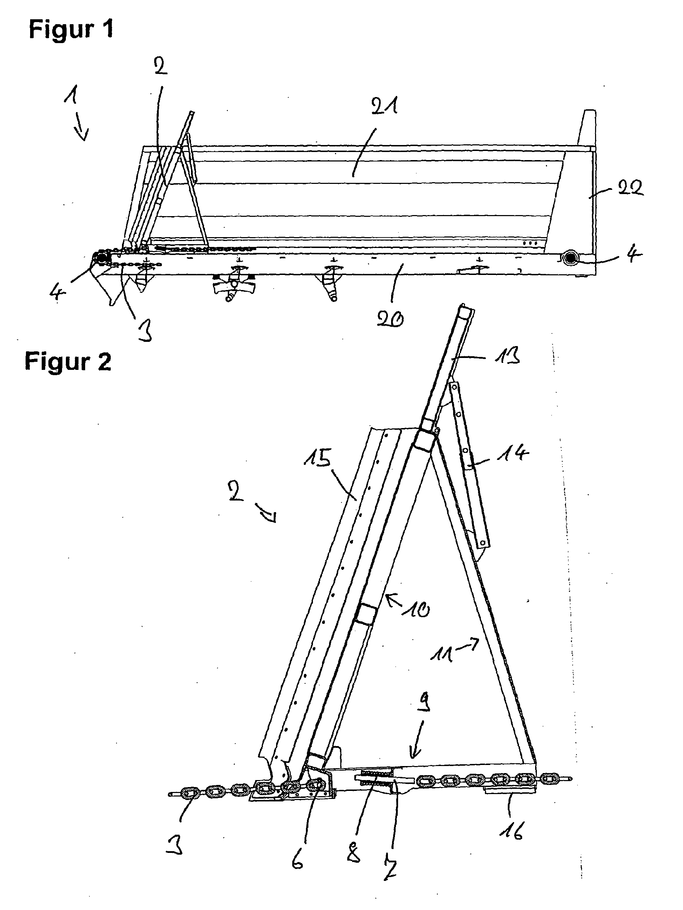

Figur 1 zeigt das Ausführungsbeispiel des erfindungsgemäßen Laderaumaufbaus in einer Schnittansicht entlang der Längsachse des Laderaums. Der Laderaumaufbau weist dabei eine Entladeseite 1 auf, auf welcher das Ladegut entladen wird. Weiterhin weist der Laderaum Seitenwände 21 auf, welche sich entlang der Längsachse des Laderaums auf beiden Seiten erstrecken. Die der Entladeseite gegenüberliegende Stirnwand 2 des Laderaums ist dabei entlang der Längsachse des Laderaums bewegbar, um das im Laderaum befindliche Ladegut zur Vorverdichtung oder Entladung auf die Entladeseite hin zu bewegen. Die Stirnwand 2, welche den der Entladeseite gegenüberliegenden Abschluß des Laderaums bildet, arbeitet dabei bei der Bewegung auf die Entladeseite hin wie ein Kolben, welcher das im Laderaum befindliche Ladegut vor sich herschiebt.

In der in Figur 1 gezeigten Stellung ist dabei die Stirnwand 2 maximal in Richtung auf die Entladeseite hin bewegt. Der durch die Seitenwände 21 sowie die Stirnwand 2 begrenzte Laderaum ist damit in der gezeigten Position minimal. Die Stirnwand 2 wird nach dem Entladen aus der in Figur 1 gezeigten Position auf die der Entladeseite 1 gegenüberliegende Seite 22 hin bewegt, damit Ladegut von oben in den Laderaum geladen werden kann.

Der Antrieb der Stirnwand 2 erfolgt nun erfindungsgemäß durch ein umlaufendes Zugmittel 3, in diesem Fall über mehrer parallel angeordnete umlaufende Ketten. Dabei sind im Bereich der Entladeseite 1 und im Bereich der der Entladeseite 1 gegenüberliegenden Seite 22 des Laderaumaufbaus Umlenkrollen 4 vorgesehen, über welche das Zugmittel 3 geführt ist. Das Zugmittel 3 weist damit einen oben liegenden Strang auf, der mit Stirnwand 2 verbunden ist, sowie einen unten laufenden Strang, welcher im Bodenrahmen 20 des Laderaumaufbaus verläuft. Wird das Zugmittel in Fig. 1 im Gegenuhrzeigersinn bewegt, bewegt sich der obere Strang mit der Stirnwand in Richtung auf die Entladeseite, während sich der unten laufende Strang in Gegenrichtung zurückbewegt. Wird das Zugmittel dagegen im Uhrzeigesinn bewegt, zieht es die Stirnwand wider von der Entladeseite weg.

Anders als bei Kratzbodenantriebssystemen, welche ebenfalls auf umlaufenden Zugmitteln beruhen, wird beim vorliegenden Antrieb das umlaufende Zugmittel immer nur um maximal die Länge des Laderaums vor und zurück bewegt, wenn die Stirnwand entsprechend vor und zurückbewegt wird. Hierdurch sind auch keine umlaufenden, sich quer zur Bewegungsrichtung des Zugmittels erstreckenden Elemente vorhanden, welche im Bereich der unten laufenden Ketten eine Brückenkonstruktion erfordern würden. Hierdurch können die unten rücklaufenden Ketten 3 im Bodenrahmen 20 durch einzelne Aussparungen geführt werden, was einen besonders flachen Bodenaufbau ermöglicht.

Figur 2 zeigt nun eine vergrößerte Darstellung der erfindungsgemäßen Stirnwand in einer Schnittansicht entlang der Längsachse des Laderaums. Das umlaufende Zugmittel 3 ist dabei mit einem Ende an einem ersten, dem Laderaum zugewandten Befestigungspunkt 6, mit dem anderen Ende an einem zweiten, dem Laderaum abgewandten Befestigungspunkt 7 mit der Stirnwand verbunden, so dass die Stirnwand selbst einen Teil der umlaufenden und geschlossenen Kettenstränge bildet. Dabei weist der Befestigungspunkt 7 ein Spannelement 8 auf, über welches die Kette 3 gespannt wird.

Zum Entladen wird die Stirnwand 2 über das Zugmittel 3 entlang der Längsachse des Laderaums auf die Entladeseite hin bewegt und schiebt dabei das Ladegut in diese Richtung. Bei einer Bewegung in Richtung auf die Entladeseite 1 hin wird dabei über die in Figur 2 links gezeigte Seite des Zugmittels 3 eine Zugkraft auf den dem Laderaum zugewandeten Befestigungspunkt 6 ausgeübt. Im umgekehrten Fall, in welchem nur sehr viel geringere Kräfte zur Zurückbewegung der Stirnwand ausgeübt werden müssen, werden die Zugkräfte vom in Figur 2 rechts gezeigten Teil des Zugmittels auf den Befestigungspunkt 7 ausgeübt. Aus diesem Grund ist das Spannelement auch an der dem Laderaum abgewandeten Seite der Stirnwand angeordnet.

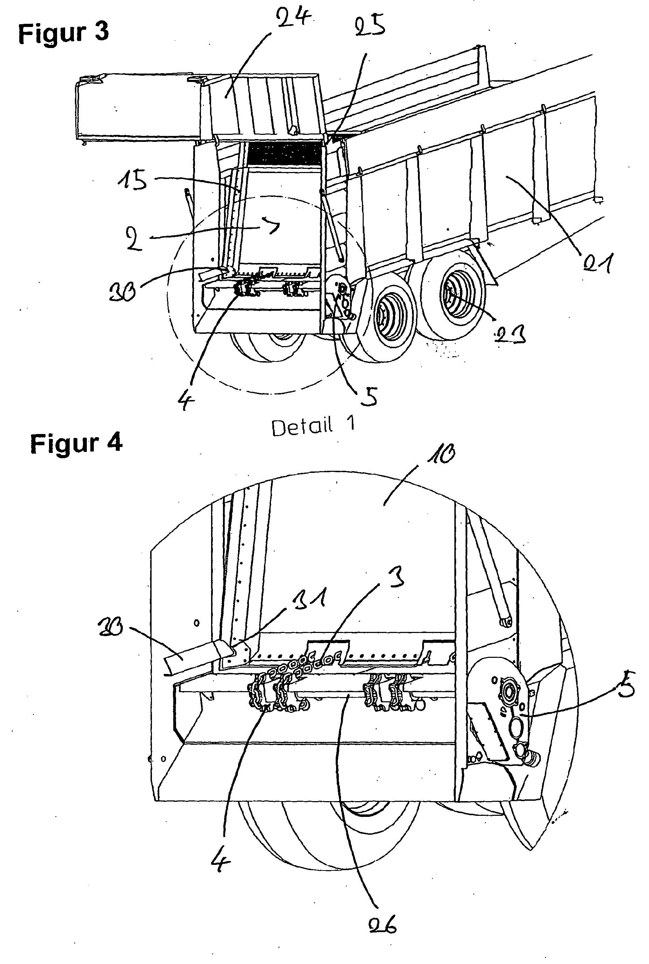

Der Schnitt entlang der Längsrichtung des Laderaums zeigt dabei das Profil der Stirnwand mit einem entlang des Bodens des Laderaums verlaufenden Grundfläche 9, einer dem Laderaum zugewandten Seite 10 und einer auf der dem Laderaum abgewandten Seite angeordneten Stützstruktur 11. Die Stirnwand ist dabei als Rahmenkonstruktion ausgeführt, welche die den Laderaum begrenzende Stirnwandplatte trägt. Die dem Laderaum zugewandte Seite 10 ist auf der dem Laderaum zugewandten Seite der Grundfläche, die Stützstruktur 11 auf der dem Laderaum abgewandten Seite der Grundflächemit dieser verbunden, so dass das Profil der Stirnwand im wesentlichen die Form eines Dreiecks aufweist. Hierdurch ergibt sich eine leichte und kostengünstige Konstruktion, durch welche die Kräfte, welche auf die dem Laderaum zugewandte Seite 10 einwirken, besonders gut auf die Grundfläche und damit auf den Boden bzw. die Bodenstruktur des Laderaumaufbaus abgeleitet werden können. Die Grundfläche 16 stützt sich dabei mit einem auf der dem Laderaum abgewandeten Seite angeordneten Führung 16 auf dem Boden bzw. der Bodenstruktur des Laderaums ab und wird mit in Figur 3 gezeigten Führungen 30, 31, welche an der dem Laderaum zugewandten Seite in Bodennähe angeordnet sind, gehindert, nach hinten zu kippen.

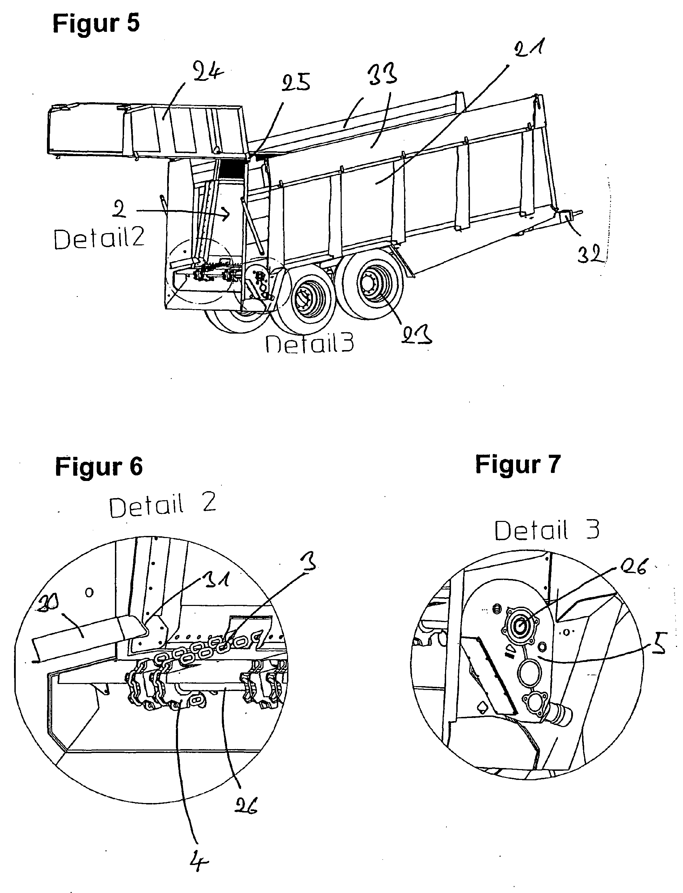

Wie aus Figur 1 und 2 ersichtlich, füllt die Stirnwand dabei die gesamte Höhe des Laderaumquerschnitts aus, so dass sie wie ein Kolben das ladegut vor sich her schiebt. Dabei ist ein aufklappbares Element 13 an der Oberkante der Stirnwand vorgesehen, welches über einen Klappmechanismus 14 nach oben geklappt werden kann, um die Höhe der Stirnwand nochmals zu vergrößern und an erhöhte Seitenwände anzupassen. Wie aus Fig. 3 und 5 hervorgeht, sind dementsprechend an den Oberkanten der Seitenwände 21 Klappelemente 33 angeordnet, welche wie das Klappelement 13 der Stirnseite 3 nach oben geklappt werden können, um die Höhe des Laderaums zu vergrößern.

Figur 3 zeigt ein Ausführungsbeispiel des erfindungsgemäßen Transportwagens, auf welchem das Ausführungsbeispiel des erfindungsgemäßen Laderaumaufbaus montiert ist. Der Transportwagen ist dabei ein Anhänger, wie er z. B. von einem Schlepper üblicherweise gezogen wird. Der Transportwagen weist dabei Räder 23 auf, welche an zwei nicht angetriebenen Achsen angeordnet sind.

Wie aus Figur 3 und sowie aus dem vergrößerten Abschnitt in Figur 4 hervorgeht, laufen die Zugmittel 3 dabei über Umlenkrollen 4, welche auf einer Welle 26, welche unterhalb der Entladekante angeordnet ist, befestigt sind. Durch drehen der Welle 26 werden die Umlenkrollen 4 gedreht, welche das umlaufende Zugmittel antreiben. Die Welle 26 ist dabei seitlich aus dem Laderaum herausgeführt, und wird dort über ein Getriebe 5 sowie einen Antrieb angetrieben. Hierdurch ist das Getriebe 5 außerhalb des Laderaums angeordnet und damit vor Beschädigung geschützt. Zudem wird der Laderaum hierdurch nicht verkleinert. Der Antrieb kann dabei über einen elektrischen oder hydraulischen Motor erfolgen. Das Zugmittel weist dabei mehrere, parallel nebeneinander angeordnete Stränge auf. Dabei sind ein linker und ein rechter Strang des Zugmittels 3 vorgesehen, um eine gleichmäßige Zugbewegung auf die Stirnwand auszuüben. Jeder der beiden Stränge wird dabei von zwei nebeneinander laufenden Ketten 3 gebildet.

Im unteren Bereich der Seitenwände 21 ist an der Innenwand des Laderaums eine Führungsschiene 30 angeordnet, welche nur knapp oberhalb des Bodens des Laderaums verläuft. Die Führungsschiene 30 greift in eine Aussparung 31 an der Rahmenkonstruktion der Stirnwand 2 ein, und sichert diese gegen eine Bewegung nach oben und damit ein Umkippen nach hinten. Die gezeigte Führung nimmt damit die Kräfte auf, welche beim Verschieben des Ladeguts durch die Stirnwand 2 auf die dem Laderaum zugewandte Seite 10 der Stirnwand wirken. In den Seitenbereichen sowie im Bodenbereich sind dabei Dichtungselemente 15 vorgesehen, welche dafür sorgen, dass das Ladegut nicht seitlich an der Stirnwand vorbei in den dem Laderaum abgewandten Bereich des Laderaumaufbaus rutscht.

Figur 5 zeigt nochmals das in Figur 3 gezeigte Ausführungsbeispiel des erfindungsgemäßen Transportwagens, wobei nun auch die Deichsel 32 zu sehen ist, über welche der Transportwagen von einem Schlepper gezogen wird. Die Deichsel 32 ist dabei auf der der Entladeseite gegenüberliegenden Seite 22 des Transportwagens angeordnet.

Wie in Figur 3 und Figur 5 gezeigt, ist der entladeseitige Laderaumabschluß als klappbarer Deckel 24 ausgeführt, welcher an der hinteren Oberkante an den Anlekpunkten 25 angelenkt ist. Der klappbare Deckel 24 kann damit nach oben aufgeklappt werden, um den Laderaum durch ein Verschieben der Stirnwand in Richtung auf die Entladeseite hin zu entleeren. Bei geschlossenem Deckel 24 kann entsprechend durch eine Bewegung der Stirnwand auf die Entladeseite, das heißt auf den Deckel 24 hin, eine Vorverdichtung des Ladeguts erfolgen.

In den klappbaren Deckel kann dabei ein Dungstreuwerk integriert werden, um im Laderaum geladenen Dung gleichmäßig zu verteilen. Ebenso kann dabei das Dungstreuwerk den entladeseitigen Laderaumabschluß bilden, ohne als klappbarer Deckel ausgeführt zu sein.

Der erfindungsgemäße Laderaumaufbau bzw. der erfindungsgemäße Transportwagen ist dabei zur Aufnahme bzw. dem Transport insbesondere von Schüttgut, wie z. B. Erde, Bauschutt, landwirtschaftlichen Materialien, Dung oder Müll vorgesehen. Durch den erfindungsgemäßen Antrieb der Stirnwand über ein umlaufendes Zugmittel kann dabei das Vorverdichten bzw. Entladen des Ladeguts über die Bewegung der Stirnwand entlang der Längsachse des Laderaums auf die Entladeseite hin problemlos mit jeder Art von Schlepper durchgeführt werden, ohne dass der Schlepper hierzu ein besonders ausgestattetes Hydrauliksystem benötigen würde.

Zudem kann der unten verlaufende Strang des Zugmittels im Bodenrahmen des Laderaums bzw. im Fahrzeugrahmen des Transportwagens verlaufen, so dass sich eine besonders niedrige Bauhöhe der Bodenstruktur ergibt. Weiterhin ist über den Antrieb über das Zugmittel, welches über die Umlenkrollen angetrieben wird, ein besonders gleichmäßiges Bewegen des Ladeguts möglich. Der Antrieb der Umlenkrollen und damit des Zugmittels, welches die Stirnwand entlang der Längsachse des Laderaums entweder auf die Entladeseite hin oder von der Entladeseite wegzieht, kann dabei problemlos über eine elektrischen oder hydraulischen Motor erfolgen.

Hierdurch ergibt sich ein stabil aufgebauter, kostengünstiger und vielseitig einsetzbarer Abschiebewagen, bei welchem eine gleichmäßige Abschiebegeschwindigkeit problemlos realisierbar ist.

## Patentansprüche

1. Laderaumaufbau mit einem Laderaum zur Aufnahme von Ladegut, insbesondere von Schüttgut, mit einer Entladeseite, wobei der Laderaum eine der Entladeseite gegenüberliegende Stirnwand aufweist, welche zur Vorverdichtung oder Entladung des Ladeguts entlang der Längsachse des Laderaums auf die Entladeseite hin bewegbar ist,
**dadurch gekennzeichnet,**
**dass** der Antrieb der Stirnwand über ein umlaufendes Zugmittel, insbesondere eine Kette, erfolgt.

2. Laderaumaufbau nach Anspruch 1, wobei das Zugmittel über Umlenkrollen im Bereich der Entladeseite und der dieser gegenüberliegenden Seite des Laderaumaufbaus geführt ist.

3. Laderaumaufbau nach Anspruch 2, wobei das Zugmittel über mindestens eine der Umlenkrollen angetrieben wird.

4. Laderaumaufbau nach Anspruch 3, wobei ein Antriebsgetriebe für mindestens eine der Umlenkrollen außerhalb, insbesondere seitlich, des Laderaums angeordnet ist.

5. Laderaumaufbau nach einem der vorangegangenen Ansprüche, wobei das umlaufende Zugmittel, insbesondere die Kette, zwei Enden aufweist, mit welchen es an zwei Befestigungspunkten der Stirnwand befestigt ist, so dass die Stirnwand einen Teil eines umlaufenden und geschlossenen Antriebsstrangs bildet.

6. Laderaumaufbau nach Anspruch 5, wobei mindestens einer der Befestigungspunkte ein Spannelement zum Spannen des Zugmittels aufweist.

7. Laderaumaufbau nach einem der vorangegangenen Ansprüche, wobei die Stirnwand bei der Bewegung entlang der Längsachse des Laderaums über Führungen geführt wird.

8. Laderaumaufbau nach einem der vorangegangenen Ansprüche, wobei das umlaufende Zugmittel im Bodenbereich des Laderaums verläuft.

9. Laderaumaufbau nach einem der vorangegangenen Ansprüche, wobei der oben laufende Strang des umlaufenden Zugmittels oberhalb des Bodens des Laderaums verläuft.

10. Laderaumaufbau nach einem der vorangegangenen Ansprüche, wobei der unten laufende Strang des umlaufenden Zugmittels im Aufbaurahmen des Laderaumaufbaus verläuft.

11. Laderaumaufbau nach einem der vorangegangenen Ansprüche, wobei der entladeseitige Laderaumabschluss als klappbarer Deckel oder als Dungstreuwerk ausgeführt ist.

12. Laderaumaufbau nach einem der vorangegangenen Ansprüche, wobei die Stirnwand die gesamte Breite und/oder Höhe des Laderaum-Querschnitts ausfüllt.

13. Laderaumaufbau nach einem der vorangegangenen Ansprüche, wobei die Stirnwand in einem Schnitt entlang der Längsrichtung des Laderaums ein Profil mit einer entlang des Bodens des Laderaums verlaufenden Grundfläche aufweist, an welcher die dem Laderaum zugewandte Seite der Stirnseite nach hinten über eine Stützstruktur abgestützt ist.

14. Laderaumaufbau nach Anspruch 13, wobei die Stirnwand auf der dem Laderaum zugewanden Seite in Führungen verläuft, welche die Bewegung der Stirnwand nach oben begrenzen, und sich mit der gegenüberliegenden Seite der Grundfläche, vorteilhafterweise über Führungen, nach unten abstützt.

15. Transportwagen mit einem Laderaumaufbau nach einem der Ansprüche 1 bis 14.

16. Transportwagen nach Anspruch 15, wobei der unten laufende Strang des umlaufenden Zugmittels im Fahrzeugrahmen des Transportwagens verläuft.
